# EUROPEAN PATENT APPLICATION

(11) **EP 3 231 316 A1**
(43) Date of publication of application: **18.10.2017**
(21) Application number: 16200467.5
(22) Date of filing: 24.11.2016
(51) Int. Cl.: A45D 20/12

(54) **HAIR CARE APPLIANCE**

(30) Priority: 26.11.2015 GB 201520870
(71) Applicant: Dyson Technology Limited, Malmesbury Wiltshire SN16 0RP (GB)
(72) Inventor: STEPHENS, Philip, Malmesbury, Wiltshire SN16 0RP (GB); IMHASLY, Nathan, Malmesbury, Wiltshire SN16 0RP (GB); SMITH, Stephen, Malmesbury, Wiltshire SN16 0RP (GB)
(74) Representative: Fowler, Maria Jayne

(57) **Abstract**

Disclosed is a hair care appliance comprising a body having an outer wall, an inner wall and a gasket located between the outer wall and the inner wall, wherein the gasket comprises a seal extending between the outer wall and the inner wall and a centralising feature extending from the inner wall towards the outer wall. The centralising feature may comprise a convex surface extending from the inner wall towards the outer wall. The convex surface may be hemispherical. The outer wall comprises an inner surface and the inner surface may comprise a cooperating centralising feature which may be a number of discrete points of contact radially disposed around the inner surface. The gasket may comprise a further seal extending around an upstream end of the gasket.

## Description

This invention relates to a hand held appliance, in particular a hair care appliance and a fluid outlet from such an appliance.

Blowers and in particular hot air blowers are used for a variety of applications such as drying substances such as paint or hair and cleaning or stripping surface layers. In addition, hot air blowers such as hot styling brushes are used to style hair from a wet or dry condition.

Generally, a motor and fan are provided which draw fluid into a body; the fluid may be heated prior to exiting the body. The motor is susceptible to damage from foreign objects such as dirt or hair so conventionally a filter is provided at the fluid intake end of the blower. Conventionally such appliances are provided with a nozzle which can be attached and detached from the appliance and changes the shape and velocity of fluid flow that exits the appliance. Such nozzles can be used to focus the outflow of the appliance or to diffuse the outflow depending on the requirements of the user at that time.

According to a first aspect, the invention provides a hair care appliance comprising a body having an outer wall, an inner wall and a gasket located between the outer wall and the inner wall, wherein the gasket comprises a seal extending between the outer wall and the inner wall and a centralising feature extending from the inner wall towards the outer wall.

Preferably, the centralising feature comprises a convex surface extending from the inner wall towards the outer wall.

In a preferred embodiment the convex surface is hemispherical.

Preferably, the outer wall comprises an inner surface and the inner surface comprises a cooperating centralising feature.

In a preferred embodiment the cooperating centralising feature comprises a number of discrete points of contact radially disposed around the inner surface.

Preferably, cooperating centralising feature comprises at least three ribs extending radially inwards of the inner surface towards the inner wall.

In a preferred embodiment the at least three ribs comprises four ribs.

Preferably, the centralising feature only engages with the cooperating centralising feature.

In a preferred embodiment the seal extends continuously around the gasket.

Preferably, the seal extends continuously between the outer wall and the inner wall.

In a preferred embodiment the inner wall comprises a flange extending radially around a radially outer surface of the inner wall.

Preferably, the gasket further comprises locating feature for locating the gasket with respect to the flange.

In a preferred embodiment the locating feature comprises a recess extending radially around an inner surface of the gasket and wherein the recess is adapted to accommodate the flange.

Preferably, the locating feature comprises a protrusion extending radially around an inner surface of the gasket wherein when the gasket is attached to the inner wall, the gasket deforms to enable the flange to pass over the protrusion into the recess.

In a preferred embodiment the gasket comprises a further seal extending around an upstream end of the gasket.

Preferably, the outer wall comprises an upstream end and the further seal engages with the upstream end of the outer wall.

In a preferred embodiment the outer wall comprises first part and a second part, wherein the second part comprises the upstream end of the outer wall.

Preferably, the first part engages with the seal and the centralising feature.

In a preferred embodiment the second part comprises an annulus having a flange and the first part comprises a cooperating projection wherein the flange engages against a cooperating projection from the first part.

Preferably, the further seal urges the flange against the cooperating projection.

Preferably, the appliance is a hairdryer.

The invention will now be described by example, with reference to the accompanying drawings, of which:
Figure 1 shows a perspective view of an appliance according to the invention;
Figure 2 shows a cross section through the appliance of Figure 1;
Figure 3 shows a cross section through a gasket according to the invention;
Figure 4a shows an enlarged cross-section through part of an appliance according to the invention;
Figure 4b shows a further enlarged cross-section through part of an appliance according to the invention; and
Figure 5 shows an internal view of the second end of the body of an appliance according to the invention.

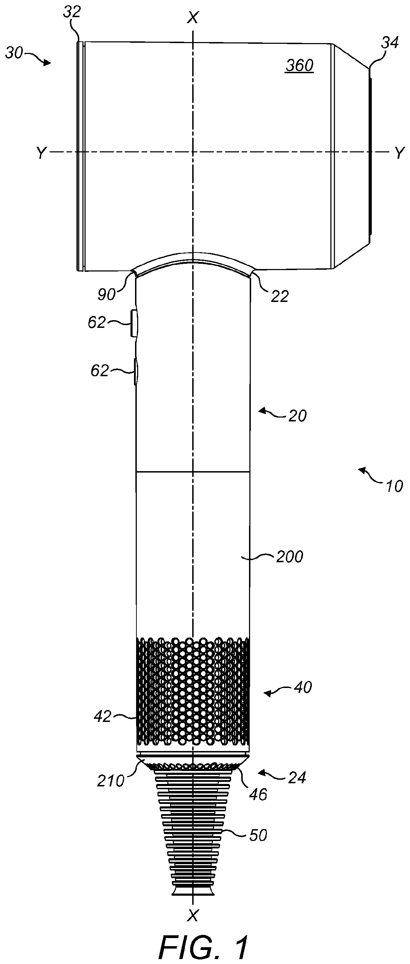

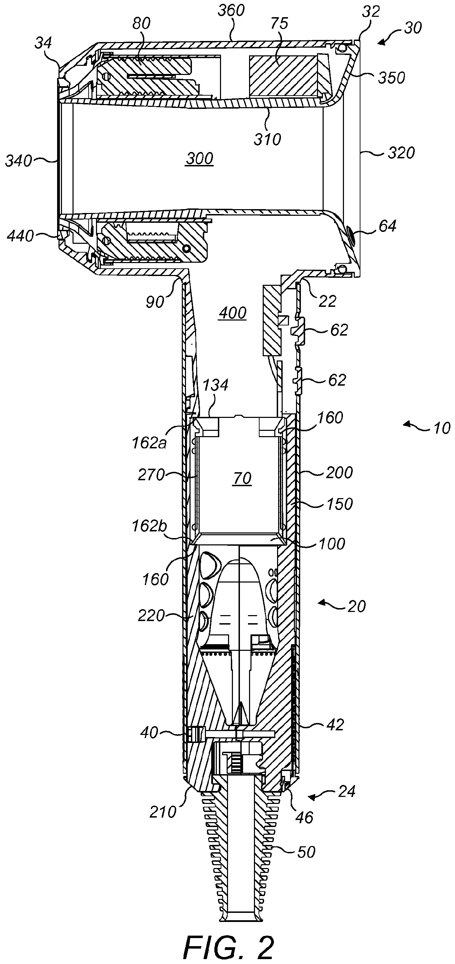

Figures 1 and 2 show a hairdryer 10 with a handle 20 and a body 30. The handle has a first end 22 which is connected to the body 30 and a second end 24 distal from the body 30 and which includes a primary fluid inlet 40. Power is supplied to the hairdryer 10 via a cable 50. At a distal end of the cable 50 from the hairdryer 10 a plug (not shown) is provided, the plug may provide electrical connection to mains power or to a battery pack for example.

The handle 20 has an outer wall 200 which extends from the body 30 towards a distal end 24 of the handle. At the distal end 24 of the handle an end wall 210 extends across the outer wall 200. The cable 50 enters the hairdryer through this end wall 210. The primary fluid inlet 40 in the handle 20 includes first apertures that extend around and along 42 the outer wall 200 of the handle in a series of rows and/or columns that extend from the distal end 24 of the handle 20 and second apertures that extend across 46 and through the end wall 210 of the handle 20. The cable 50 is located approximately in the middle of the end wall 210 so extends from the centre of the handle 20. The handle 20 has a longitudinal axis X-X along which the outer wall 200 extends from the body 30 towards the distal end 24.

It is preferred that the cable 50 extends centrally from the handle 20 as this means the hairdryer is balanced regardless of the orientation of the handle 20 in a users' hand. Also, if the user moves the position of their hand on the handle 20 there will be no tugging from the cable 50 as it does not change position with respect to the hand when the hand is moved. If the cable were offset and nearer one side of the handle then the weight distribution of the hairdryer would change with orientation which is distracting for the user.

Upstream of the primary fluid inlet 40, a fan unit 70 is provided. The fan unit 70 includes a fan and a motor. The fan unit 70 draws fluid through the primary fluid inlet 40 towards the body 30 through a primary fluid flow path 400 that extends from the primary fluid inlet 40 and into the body 30 where the handle 20 and the body 30 are joined 90. The body 30 has a first end 32 and a second end 34, the primary fluid flow path 400 continues through the body 30 towards the second end 34 of the body, around a heater 80 and to a primary fluid outlet 440 where fluid that is drawn in by the fan unit exits the primary fluid flow path 400. The primary fluid flow path 400 is non-linear and flows through the handle 20 in a first direction and through the body 30 in a second direction which is orthogonal to the first direction.

The body 30 includes an outer wall 360 and an inner duct 310. The primary fluid flow path 400 extends along the body from the junction 90 of the handle 20 and the body 30 between the outer wall 360 and the inner duct 310 towards the primary fluid outlet 440 at the second end 34 of the body 30.

An inner wall 260 extends within the outer wall 360. The inner wall 260 at least partially defines the primary fluid outlet 440 and extends from the second end 34 of the body 30 between the inner duct 310 and the outer wall 360.

Another fluid flow path is provided within the body; this flow is not directly processed by the fan unit or the heater but is drawn into the hairdryer by the action of the fan unit producing the primary flow through the hairdryer. This fluid flow is entrained into the hairdryer by the fluid flowing through the primary fluid flow path 400.

The first end 32 of the body includes a fluid inlet 320 and the second end 34 of the body includes a fluid outlet 340. Both the fluid inlet 320 and the fluid outlet 340 are at least partially defined by the inner duct 310 which is an inner wall of the body 30 and extends within and along the body. A fluid flow path 300 extends within the inner duct 310 from the fluid inlet 320 to the fluid outlet 340. At the first end 32 of the body 30, a side wall 350 extends between the outer wall 360 and the inner duct 310. This side wall 350 at least partially defines the fluid inlet 320. The primary fluid outlet 440 is annular and surrounds the fluid flow path.

A PCB 75 including the control electronics for the hairdryer is located in the body 30 near the side wall 350 and fluid inlet 320. The PCB 75 is ring shaped and extends round the inner duct 310 between the inner duct 310 and the outer wall 360. The PCB 75 is in fluid communication with the primary fluid flow path 400. The PCB 75 extends about the fluid flow path 300 and is isolated from the fluid flow path 300 by the inner duct 310.

The PCB 75 controls parameters such as the temperature of the heater 80 and the speed of rotation of the fan unit 70. Internal wiring (not shown) electrically connects the PCB 75 to the heater 80 and the fan unit 70 and the cable 50. Control buttons 62, 64 are provided and connected to the PCB 75 to enable a user to select from a range of temperature settings and flow rates for example.

Downstream of the PCB 75, is the heater 80 and a PCB baffle 700 is provided between the PCB 75 and the heater 80. The PCB baffle provides thermal protection for the PCB 75 when the heater 80 switched on amongst other things.

In use, fluid is drawn into the primary fluid flow path 400 by the action of the fan unit 70, is optionally heated by the heater 80 and exits from the primary fluid outlet 440. This processed flow causes fluid to be entrained into the fluid flow path 300 at the fluid inlet 320. The fluid combines with the processed flow at the second end 34 of the body. In the example shown in Figure 2, the processed flow exits the primary fluid outlet 440 and the hairdryer as an annular flow which surrounds the entrained flow that exits from the hairdryer via the fluid outlet 340. Thus fluid that is processed by the fan unit and heater is augmented by the entrained flow.

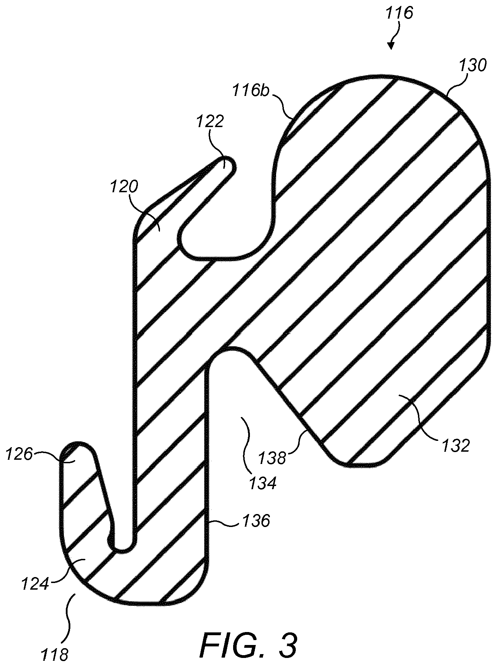

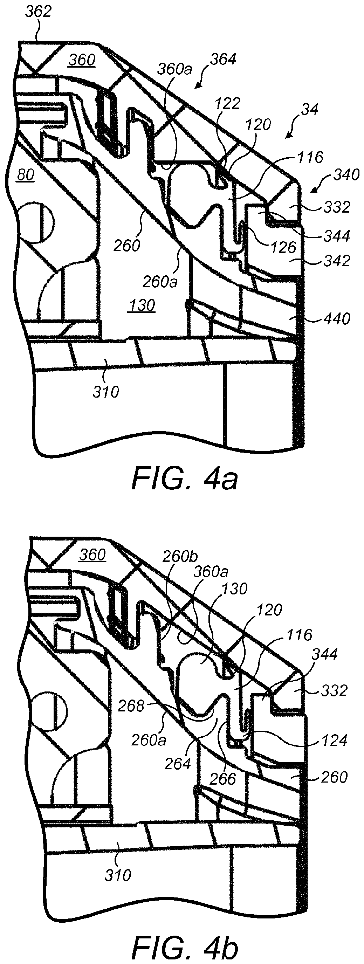

Referring in particular to Figures 3, 4a and 4b, the duct 310 is co-moulded with the inner wall 260 which are connected together with supporting ribs 130. The inner wall 260 channels fluid flowing in the primary fluid flow path 400 towards the primary fluid outlet 440. The body 30 includes, at the second end 34, a front face 340 which extends parallel to the longitudinal axis X-X of the handle.

The outer wall 360 is formed from two parts. A first part 330 extends from the first end 32 to the second end 34 in two sections. A first section 362 extends from the first end 32 and is generally tubular about a central longitudinal axis Y-Y of the body 30. A second section 364 extends from the second end 34 and is angled with respect to the longitudinal axis Y-Y of the body 30 as the diameter of the body 30 decreases towards the second end 34. The front face 340 is orthogonal to the longitudinal axis of the body 30. A second part 342 forms an annulus that extends around the front face 340.

The inner wall 260 extends radially around the downstream end of the heater 80. A radially inner surface 260a of the inner wall 260 directs the fluid that exits the heater 80 towards the fluid outlet 440. A gasket 116 is provided between the inner wall 260 and the outer wall 360 of the body 30. This gasket 116 provides a number of functions from different features of the gasket.

Firstly, the gasket 116 provides a seal 120 between the outer wall 360 and the inner wall 260. The seal 120 is, in this example a lip seal 122 that extends radially around an outer surface 116b of the gasket 116 extending from the gasket 116 towards an inner surface 360a of the outer wall 360. This seal 120 is a fluid seal to prevent fluid that exits the heater 80 exiting from anywhere other than the primary fluid outlet 440, for example between the first part 330 and the second part 342 of the outer wall 360.

A further seal 124 extends from an upstream end 118 of the gasket 116; this further seal 124 is, in this embodiment, a lip seal 126 that extends radially around the upstream end 118 of the gasket 116. The further seal 124 is adapted to urge the second part 342 of the outer wall 360 against the first part 330 of the outer wall 360. The first part 330 of the outer wall 360 is provided with a projection 332 at the front face 340 which extends radially inwards of the longitudinal axis Y-Y of the body 30. The second part 342 is provided with a flange 344 which extends radially around the largest diameter of the second part 342. The second part 342 is retained in position by the inner wall 260, the projection 332 and the further seal 124.

In one embodiment the second part 342 is formed from a metallic material and forms a part of an attachment system for attaching nozzles, for example concentrating nozzles or diffusing nozzles to the appliance. The further seal 124 ensures correct positioning of the second part 342 and prevents movement of the second part 342 which may produce a noise.

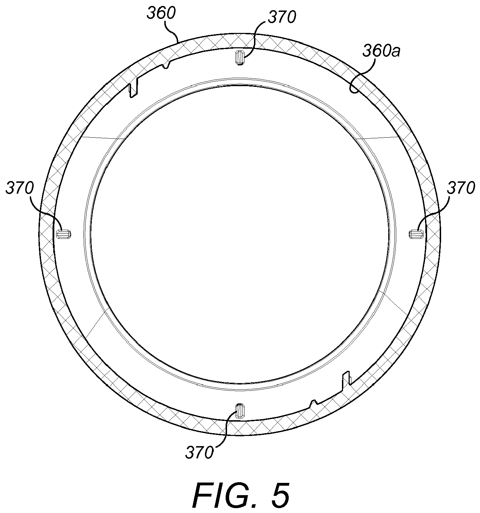

The gasket 116 additionally includes a centralising feature 130 which cooperates with the outer wall 360 to maintain concentricity of the inner wall 260 within the outer wall 360. In this embodiment, the centralising feature 130 is curved to minimise the contact between the centralising feature 130 and the inner surface 360a of the outer wall 360. The inner surface 360a of the outer wall 360 is provided with four ribs 370 which extend radially inwards of the inner surface 360a (Figure 5). The four ribs 370 are radially spaced around the inner surface 360a.

It will be apparent to the skilled person that three ribs could be used or, more than four; four is preferred as it provides a symmetrical system.

In order that the gasket 116 is located in the correct place within the body 30 so that the different functions of the gasket 116 are realised, the gasket 116 is connected to the inner wall 260. The inner wall 260 has a flange 264 that extends radially away from an outer surface 260b of the inner wall 260 towards the outer wall 360.

The gasket 116 includes a protrusion 132 and a recess 134 upstream of the protrusion 132 so that when the gasket 116 is mounted onto the inner wall 260, the protrusion 132 must pass over the flange 264 to enable the flange 264 to be seated within the recess 134. The flange 264 has an upstream face 266 and a downstream face 268 and these two faces mate with an upstream surface 136 and a downstream surface 138 of the recess 134 respectively.

The invention has been described in detail with respect to a hairdryer however, it is applicable to any appliance that draws in a fluid and directs the outflow of that fluid from the appliance.

The appliance can be used with or without a heater; the action of the outflow of fluid at high velocity has a drying effect.

The fluid that flows through the appliance is generally air, but may be a different combination of gases or gas and can include additives to improve performance of the appliance or the impact the appliance has on an object the output is directed at for example, hair and the styling of that hair.

The invention is not limited to the detailed description given above. Variations will be apparent to the person skilled in the art.

## Claims

1. A hair care appliance comprising a body having an outer wall, an inner wall and a gasket located between the outer wall and the inner wall, wherein the gasket comprises a seal extending between the outer wall and the inner wall and a centralising feature extending from the inner wall towards the outer wall wherein the inner wall comprises a flange extending radially around a radially outer surface of the inner wall.

2. An appliance according to claim 1, wherein the gasket further comprises locating feature for locating the gasket with respect to the flange.

3. An appliance according to claim 2, wherein the locating feature comprises a recess extending radially around an inner surface of the gasket and wherein the recess is adapted to accommodate the flange.

4. An appliance according to claim 3, wherein the locating feature comprises a protrusion extending radially around an inner surface of the gasket wherein when the gasket is attached to the inner wall, the gasket deforms to enable the flange to pass over the protrusion into the recess.

5. An appliance according to any preceding claim, wherein the gasket comprises a further seal extending around an upstream end of the gasket.

6. An appliance according to claim 5, wherein the outer wall comprises an upstream end and the further seal engages with the upstream end of the outer wall.

7. An appliance according to claims 6, wherein the outer wall comprises first part and a second part, wherein the second part comprises the upstream end of the outer wall.

8. An appliance according to claim 7, wherein the first part engages with the seal and the centralising feature.

9. An appliance according to claim 7 or claim 8, wherein the second part comprises an annulus having a flange and the first part comprises a cooperating projection wherein the flange engages against a cooperating projection from the first part.

10. An appliance according to claim 9, wherein the further seal urges the flange against the cooperating projection.

11. An appliance according to any preceding claim, wherein the centralising feature comprises a convex surface extending from the inner wall towards the outer wall.

12. An appliance according to claim 11, wherein the convex surface is hemispherical.

13. An appliance according to any preceding claim, wherein the outer wall comprises an inner surface and the inner surface comprises a cooperating centralising feature.

14. An appliance according to claim 13, wherein the cooperating centralising feature comprises a number of discrete points of contact radially disposed around the inner surface.

15. An appliance according to claim 14, wherein the cooperating centralising feature comprises at least three ribs extending radially inwards of the inner surface towards the inner wall.

16. An appliance according to claim 15, wherein the at least three ribs comprises four ribs.

17. A hair care appliance according to any of claims 13 to 16, wherein the centralising feature only engages with the cooperating centralising feature.

18. An appliance according to any preceding claim, wherein the seal extends continuously around the gasket.

19. An appliance according to any preceding claim, wherein the seal extends continuously between the outer wall and the inner wall.

20. An appliance according to any preceding claim wherein the appliance is a hairdryer.
